**Europäisches Patentamt**

**European Patent Office**

**Office européen des brevets**

(19)

(11) Veröffentlichungsnummer: **0 120 805**

**A1**

(12) # EUROPÄISCHE PATENTANMELDUNG

(21) Anmeldenummer: **84710005.4**

(22) Anmeldetag: **03.02.84**

(51) Int. Cl.³: **B 60 K 9/00**
**B 60 K 9/04, H 02 K 7/00**
**H 02 K 7/02, F 03 G 3/08**
**B 26 D 1/62**

(30) Priorität: **04.02.83 DE 3303823**

(43) Veröffentlichungstag der Anmeldung:
**03.10.84 Patentblatt 84/40**

(84) Benannte Vertragsstaaten:
**FR GB IT**

(71) Anmelder: **BHS-Bayerische Berg-, Hütten- und Salzwerke Aktiengesellschaft**
**Nymphenburger Strasse 120**
**D-8000 München 19(DE)**

(72) Erfinder: **Michalak, Boleslaw, Dr.-Ing.**
**Birkenstrasse 3**
**D-8481 Weiherhammer(DE)**

(72) Erfinder: **Michalak geb. Bujak, Jadwiga, Dr.-Ing.**
**Birkenstrasse 3**
**D-8481 Weiherhammer(DE)**

(72) Erfinder: **Mosburger, Hans, Dipl.-Ing.**
**Lupinenstrasse 16**
**D-8481 Weiherhammer(DE)**

(74) Vertreter: **Eder, Eugen, Dipl.-Ing. et al,**
**Patentanwälte Dipl.-Ing. E. Eder Dipl.-Ing. K. Schieschke**
**Elisabethstrasse 34**
**D-8000 München 40(DE)**

(54) **Beschleunigender und verzögernder, stationärer oder fahrbarer Antrieb.**

(57) Eine als Gyrospeicher wirkende Schwungscheibe (2) trägt wenigstens eine Arbeitsmaschine (5) die die Abtriebswelle (15) antreibt. Die Arbeitsmaschine (5) ist zentral oder exzentrisch zur Mittelachse der Schwungscheibe (2) angeordnet Mehrere Arbeitsmaschinen können auch konzentrisch zur Mittelachse der Schwungscheibe um den Umfang gleichmäßig verteilt anzuordnen sein. Jede Arbeitsmaschine (5) ist über eine Steuervorrichtung (18) mit einem Speicher (19) für die Antriebsenergie der Arbeitsmaschinen (5) verbunden. Ein solcher Antrieb kann insbesondere für einen Rotationsquerschneider für Wellpappenbahnen oder für ein Kraftfahrzeug verwendet werden.

Fig. 1

EP 0 120 805 A1

Beschleunigender und verzögernder,
stationärer oder fahrbarer Antrieb

Die Erfindung bezieht sich auf einen beschleunigenden und
verzögernden, stationären oder fahrbaren Antrieb, insbesondere für einen Rotationsquerschneider für Wellpappenbahnen oder für einen Kraftfahrzeugantrieb.

Bei Antrieben für Maschinen, wie z.B. Rotationsquerschneidern für Wellpappenbahnen, die ungleichförmig arbeiten,
d.h. die periodisch beschleunigt und verzögert werden müssen, entstehen Probleme mit der Energiezuführung beim Beschleunigen und der Energieabführung beim Verzögern. Es
werden in jedem Fall Hochleistungsantriebe erforderlich.
Die Bremsenergie geht meistens als Reibwärme verloren.

Bei Fahrzeugantrieben ist es auch schon bekannt, die Bremsenergie zu speichern. Hierbei wird ein Schwungrad als Gyrospeicher benutzt. Beim Bremsen des Fahrzeuges auftretende Bremsenergie wird in der Schwungscheibe gespeichert und
für die Beschleunigung des Fahrzeuges wieder ausgenutzt.
Solche Antriebe wurden insbesondere für den Antrieb städtischer Busse vorgeschlagen und erprobt.

Ein Nachteil der bekannten Antriebe ist die Notwendigkeit,
Hochleistungsmotoren (Elektro-, Hydro- und andere Motoren)
zu verwenden, weil sie bei großem Energieniveauunterschied
arbeiten.

Der Erfindung liegt die Aufgabe zugrunde, einen beschleunigenden und verzögernden, stationären oder fahrbaren Antrieb zu schaffen, der die Verwendung von Hochleistungsmotoren vermeidet und zudem eine Energiespeicherung ermöglicht.

Die Erfindung löst diese Aufgabe mit den Merkmalen des kennzeichnenden Teils des Anspruches 1.

Allgemein lehrt die Erfindung bei derselben identischen Maschinendynamik den Energieniveauunterschied kleiner zu machen und dadurch die notwendige Leistung ebenfalls zu verkleinern.

Nach einer Ausgestaltung der Erfindung ist jede Arbeitsmaschine über eine Steuervorrichtung mit einem Speicher für die für die Arbeitsmaschine verwendete Antriebsenergie verbunden. Die Verwendung eines dynamischen Speichers in Form einer Schwungscheibe zusammen mit einem statischen Speicher ermöglicht einen vollständigen Energieaustausch zwischen der anzutreibenden Maschine, z.B. einem Wellpappenquerschneider, oder einem Kraftfahrzeug und der Schwungscheibe. Der statische Speicher erfüllt dabei die Funktion eines Zwischenspeichers. Hierdurch wird es möglich, daß die Schwungscheibe über das durch die Drehzahl gegebene Energieniveau der anzutreibenden Maschine hinaus beschleunigt werden kann und zwar im Extremfall so lange, bis die anzutreibende Maschine ihre gesamte kinetische Energie an die Schwungscheibe abgegeben hat.

Weitere Ausgestaltungen der Erfindung ergeben sich aus den Unteransprüchen.

Die Erfindung wird nachfolgend anhand von in der Zeichnung dargestellten Ausführungsbeispielen näher erläutert. In der Zeichnung zeigen:

Fig. 1              einen schematischen Vertilalschnitt des Antriebes mit zentraler Anordnung der Arbeitsmaschine an dem Schwungrad;

Fig. 2               eine Ansicht wie in Fig. 1 einer geänderten Ausführungsform;

Fig. 3               eine Ansicht wie in Fig. 1, mit mehreren exzentrisch an der Schwungscheibe gelagerten Arbeitsmaschinen;

Fig. 4               eine Ansicht wie in Fig. 3, einer geänderten Ausführung;

Fig. 5               eine schematische Ansicht des Gesamtantriebes für einen Rotationsquerschneider für eine Wellpappenbahn, und

Fig. 6               eine schematische Ansicht eines Gesamtantriebes für ein Kraftfahrzeug.

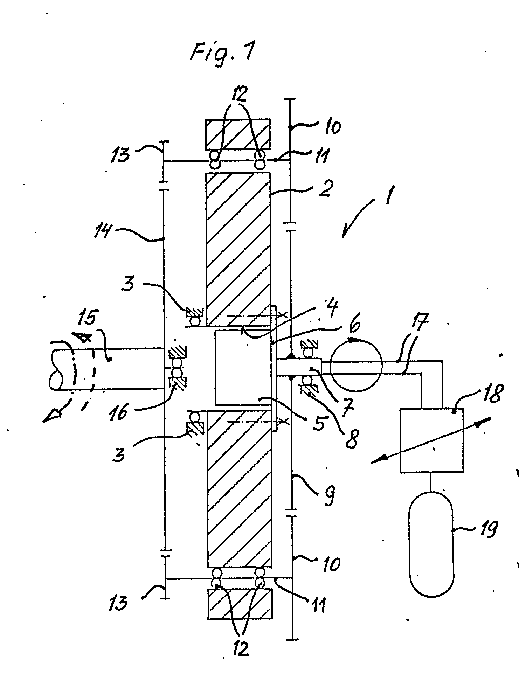

Der in Fig. 1 dargestellte Antrieb 1 umfaßt eine Schwungscheibe 2, die mittels den schematisch angedeuteten Lagern 3 frei drehbar gelagert ist.

Zentrisch zur Mittelachse der Schwungscheibe 2 ist in einer Ausnehmung 4 eine Arbeitsmaschine 5 über ein Stirnschild 6 fest mit der Schwungscheibe 2 verbunden gelagert. Vorzugsweise findet eine hydraulische Arbeitsmaschine 5 Verwendung. Es ist aber auch die Verwendung einer pneumatischen oder elektrischen Arbeitsmaschine 5 möglich.

Mit der An- bzw. Abtriebswelle 7, welche in Lagern 8 gelagert ist, ist ein Zahnrad 9 drehfest verbunden. Mit diesem kämmen mehrere, um den Umfang des Zahnrades 9 gleichmäßig verteilt angeordnete Ritzel 10. Die Ritzel 10 sitzen drehfest auf Wellen 11, welche die Schwungscheibe 2 durchqueren und durch Lager 12 gelagert sind. Am gegenüberliegenden Ende sind an den Wellen 11 Ritzel 13 drehfest gelagert. Diese kämmen mit einem Zahnrad 14, welches fest mit der An- bzw. Abtriebswelle 15 verbunden ist, die mittels Lager 16 drehbar gelagert ist. Mit dieser An- bzw. Abtriebswelle 15 ist die zu beschleunigende bzw. zu verzögernde Maschine, z.B. ein Rotationsquerschneider für eine Wellpappenmaschine, verbunden.

Zu der Arbeitsmaschine 5 führen Speiseleitungen 17, über die ein hydraulisches bzw. pneumatisches Medium oder elektrischer Strom zugeleitet wird. Die Leitungen 17 sind mit einer Steuervorrichtung 18 verbunden, an die ein Speicher 19, je nach dem, für ein hydraulisches oder pneumatisches Medium oder für die elektrische Energie, angeschlossen ist.

Die Leitungen 17 sind über die Welle 7 mit der Arbeitsmaschine 5 über nicht näher dargestellte Drehanschlußverbindungen verbunden.

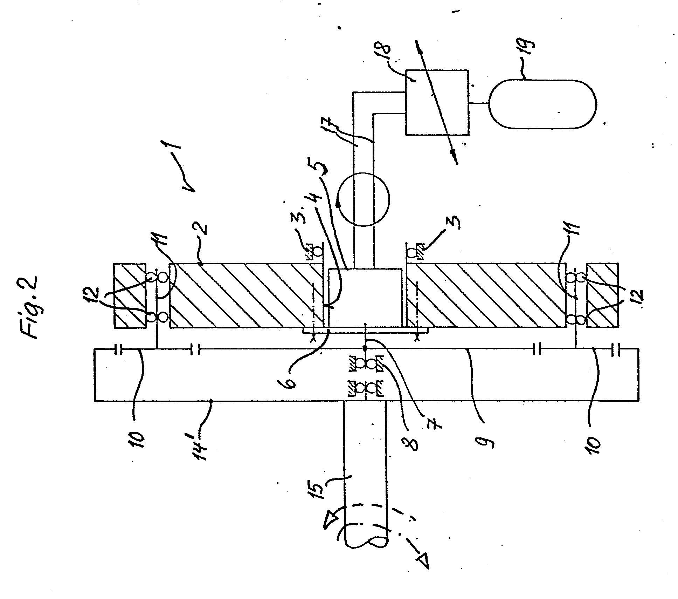

Die in Fig. 2 dargestellte, geänderte Ausführungsform sieht ebenfalls eine zentrale Lagerung der Arbeitsmaschine 5 in der Schwungscheibe 2 vor. Statt eines außen verzahnten Zahnrades 14 findet hier ein innenverzahntes Zahnrad 14' Verwendung. Die Ritzel 13 nach Fig. 1 können entfallen. Die Drehanschlußvorrichtung der Leitungen 17 zur Arbeitsmaschine 5 kann einfacher ausgebildet werden, da der direkte Anschluß an die Arbeitsmaschine möglich ist.

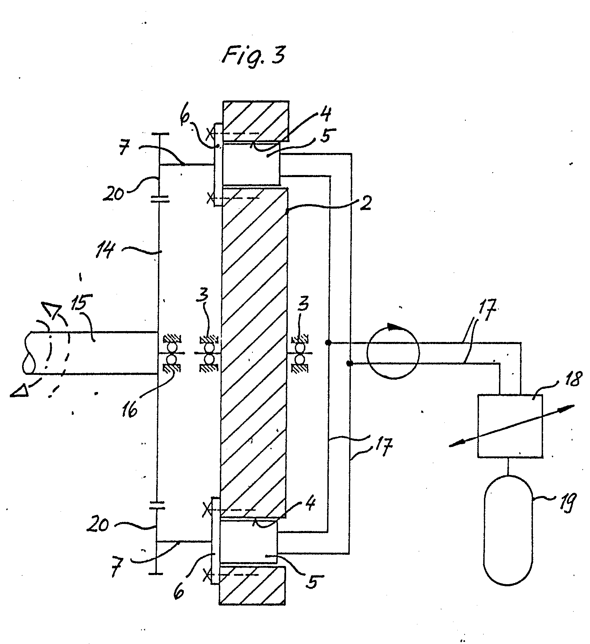

Die in Fig. 3 dargestellte Abänderung zeigt exzentrisch zur Mittelachse der Schwungscheibe 2 um deren Umfang gleichmäßig verteilte Arbeitsmaschinen 5. Deren Leitungen 17 sind miteinander parallel geschaltet und wiederum mit der Steuervorrichtung 18 verbunden. An den An- bzw. Abtriebswellen 7 der Arbeitsmaschinen 5 sitzen Ritzel 20, die mit dem Zahnrad 14 der An- bzw. Abtriebswelle 15 kämmen. Bei dieser Anordnung kann wieder ein außenverzahntes Stirnrad 14 verwendet werden.

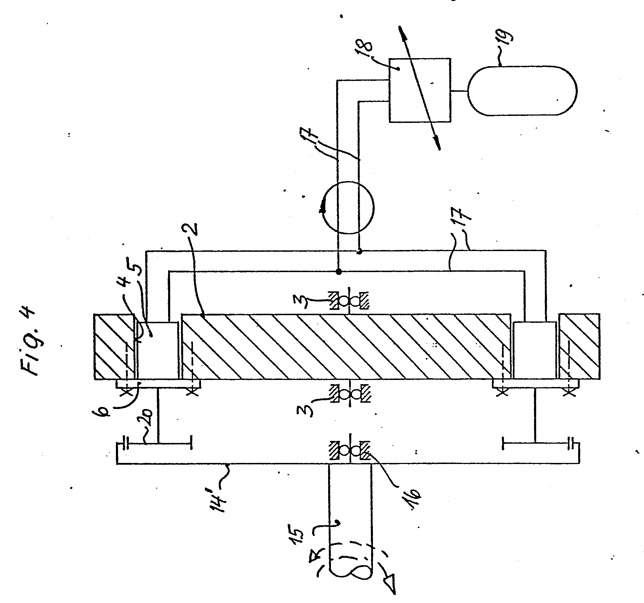

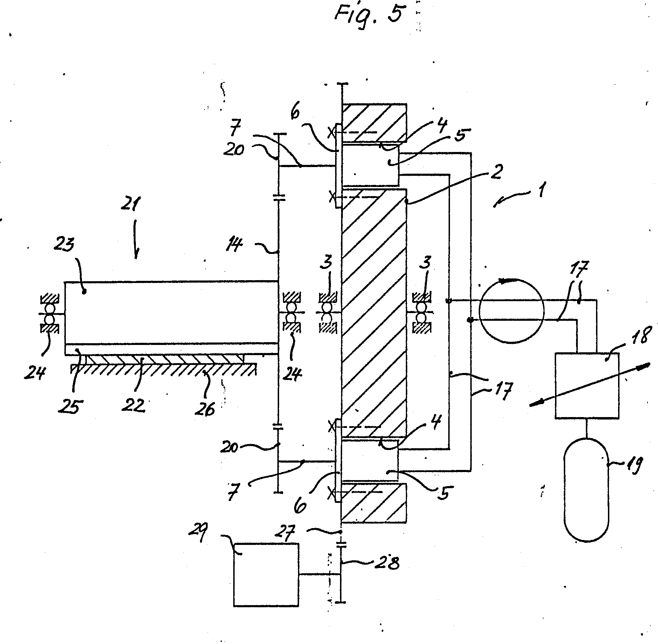

Die in Fig. 4 dargestellte, geänderte Ausführungsform entspricht weitgehendst der nach Fig. 3. Die mehreren Arbeitsmaschinen 5, welche exzentrisch zur Mittelachse der Schwungscheibe 2 angeordnet sind, sind mit der An- bzw. Abtriebswelle 15 über ein innenverzahntes Zahnrad 14' und Ritzel 20 verbunden. Bei dem Gesamtantrieb nach Fig. 5 für einen Rotationsquerschneider 21 für eine Wellpappenbahn 22 findet der Antrieb 1 nach Fig. 3 Verwendung.

Die Messerwalze 23 bildet die An- bzw. Abtriebswelle des Antriebes 1. Die Messerwalze 23 ist mittels der Lager 24 drehbar gelagert. Die Messerwalze 23 ist mit einem längs einer Mantellinie verlaufenden Messer 25, das in gewünschten Abständen die Wellpappenbahn 22, die von einem Gegenelement 26 abgestützt wird, durch querverlaufende Schnitte in entsprechende Formate unterteilt.

Mit der Schwungscheibe 2 ist ein Zahnkranz 27 fest verbunden. Mit diesem kämmt ein Ritzel 28, das fest auf der Antriebswelle eines Antriebsmotors 29, z.B. eines Elektromotors, vorzugsweise mit einstellbarer Drehzahl, sitzt.

Der Antrieb für den Rotationsquerschneider 21 arbeitet in einem sich wiederholenden Zyklus nach folgendem Wirkungsprinzip: Die Schwungscheibe 2 wird durch den Antriebsmotor 29 auf eine vorbestimmte, im wesentlichen konstante Geschwindigkeit gebracht. Vorzugsweise ist diese Geschwindigkeit der arithmetische Mittelwert der maximalen und minimalen Arbeitsgeschwindigkeit des Rotationsquerschneiders 21. Nach Erreichen dieser vorbestimmten, konstanten Geschwindigkeit deckt der Antriebsmotor 29 im wesentlichen nurmehr Reibungsverluste.

In der Zeitspanne, in der die Arbeitsmaschinen 5 sich nicht drehen, rotiert die Messerwalze 23 des Rotationsquerschneiders 21 mit derselben Geschwindigkeit wie die Schwungscheibe 2.

Um die Messerwalze 23 zu beschleunigen, werden die Arbeitsmaschinen 5 durch die Steuervorrichtung 18 mit dem Speicher 19 verbunden. Gespeist von der im Speicher 19 vorhandenen Energie, z.B. einem unter Druck stehenden hydraulischen Medium, arbeiten nun die Arbeitsmaschinen 5 als Motoren und zwar in der Drehrichtung der Schwungscheibe 2. Die Energie für diese Beschleunigung der Messerwalze 23 kommt dadurch z.T. von den Arbeitsmaschinen 5, zum Teil von der Schwungscheibe 2. Diese verringert während dieses Zyklusabschnittes etwas ihre Drehzahl.

Wenn die Messerwalze 23 die vorbestimmte, gewünschte Maximalgeschwindigkeit erreicht hat, erfolgt eine Umsteuerung der Steuervorrichtung 18 so, daß die Arbeitsmaschine 5 verzögernd arbeiten. Im Falle von hydraulischen Arbeitsmaschinen 5 arbeiten sie als Pumpen. Desgleichen bei pneumatischen Arbeitsmaschinen. Bei elektrischen Arbeitsmaschinen 5 arbeiten sie als Generator. Sie bremsen die Messerwalze 23 gegenüber der Schwungscheibe 2 ab, laden den Speicher 19 hydrostatisch, pneumatisch oder elektrisch mit Energie auf und beschleunigen gleichzeitig die Schwungscheibe 2 geringfügig. Die Bremsenergie wird z.T. für das Aufladen des Speichers 19, z.T. für die Beschleunigung der Schwungscheibe 2, verwendet.

Der Vorgang dauert so lange, bis die Messerwalze 23 die Geschwindigkeit der Schwungscheibe 2 erreicht, d.h. bis die Relativgeschwindigkeit zwischen der Messerwalze 23 und der Schwungscheibe 2 Null wird.

Anschließend arbeiten die Arbeitsmaschinen 2 wieder als
Motoren. Sie nehmen die im Speicher 19 gespeicherte Energie auf und behalten ihre Drehrichtung - entgegen der
Drehrichtung der Schwungscheibe 2 - bei. Diese wird weiter beschleunigt bei gleichzeitig weiterer Verzögerung
der Messerwalze 23.

Wenn die Messerwalze 23 die vorbestimmte, gewünschte Minimaldrehzahl erreicht, erfolgt die Umsteuerung der Steuervorrichtung 18. Die Arbeitsmaschinen 5 arbeiten bei hydraulischer oder pneumatischer Ausführung als Pumpen, bei elektrischer als Generatoren. Die Messerwalze 23 wird bis auf
die Drehzahl der Schwungscheibe 2 beschleunigt, welche in
diesem Zyklusabschnitt ihrerseits etwas langsamer wird.

Der Arbeitszyklus ist abgeschlossen, wenn die Messerwalze
23 die Geschwindigkeit der Schwungscheibe 2 erreicht hat.

Bei der beschriebenen Arbeitsweise tritt eine Drehzahlschwankung der Schwungscheibe 2 auf. Die Schwungscheibe 2
wird abwechselnd beschleunigt und verzögert, je nachdem,
ob das Energieniveau auf der Seite des Rotationsquerschneiders 21 oder auf der Seite der Schwungscheibe 2 größer ist.
Unter dem Energieniveau ist die Summe aus der kinetischen
und statischen Energie zu verstehen. Die Größe der Drehzahlschwankung der Schwungscheibe 2 ist abhängig vom Verhältnis der Massenträgheitsmomente von Schwungscheibe 2
und Rotationsquerschneider 21. Der Rotationsquerschneider
21 kann die Pappebahn 22 in Bogen schneiden, welche größer
oder kleiner als der Umfang des Messerflugkreises ist.
Während das Messer die durchlaufende Wellpappenbahn 22
schneidet, muß ihre Geschwindigkeit gleich sein wie die
Bahngeschwindigkeit. Während der Zeit, während der nicht
geschnitten wird, ist die Messerwalze 23 zu beschleunigen
und zu verzögern in Abstimmung mit Formatgröße der Schnitte und der Bahngeschwindigkeit.

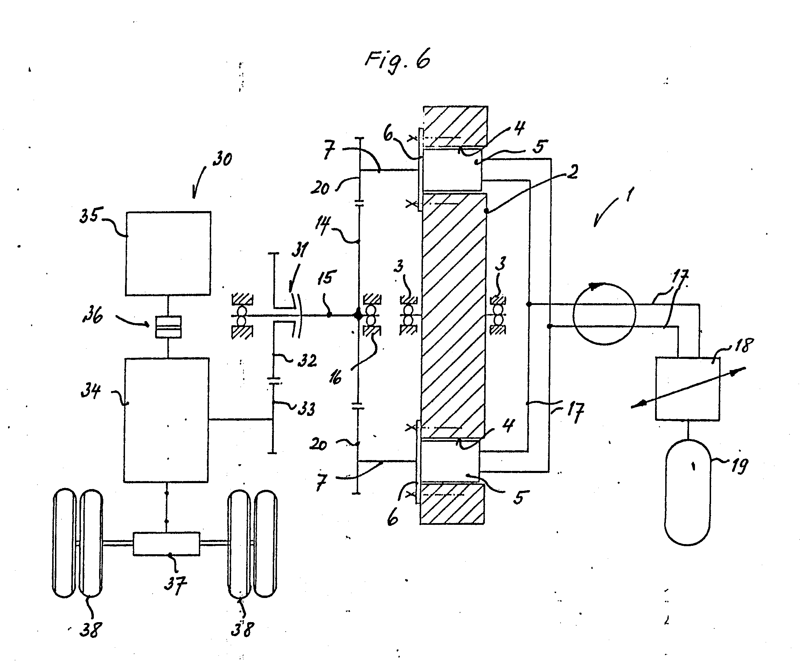

Bei dem in Fig. 6 dargestellten Gesamtantrieb eines Kraftfahrzeuges 30 findet ein Antrieb 1 nach Fig. 3 Verwendung.
Die An- bzw. Abtriebswelle 15 des Antriebes 1 ist über eine ein- und ausschaltbare Kupplung 31, den Zahnrädern 32
und 33 mit dem Fahrzeuggetriebe 34 verbindbar.

Der Antriebsmotor 35, vorzugsweise ein Verbrennungsmotor,
des Fahrzeuges 30 ist wie üblich, über die Fahrzeugkupplung
36, dem Getriebe 34, dem Differentialgetriebe 37 mit den
angetriebenen Fahrzeugrädern 38 verbunden.

Der Gesamtantrieb für das Kraftfahrzeug 30 arbeitet wie
folgt:

Um das Fahrzeug 30 aus dem Stillstand auf eine bestimmte
Geschwindigkeit zu beschleunigen, treibt der Antriebsmotor
35 über die Kupplung 36 das Getriebe 34, das Differentialgetriebe 37 die Antriebsräder 38 an. Während dieses Vorganges ist die Verbindung zwischen dem Getriebe 34 und
der Welle 15 getrennt, d.h. die Kupplung 31 befindet sich
in ausgekuppeltem Zustand. Die Zahnräder 32 und 33 drehen
im Leerlauf. Solange sich das Fahrzeug 30 mit gleichbleibender Geschwindigkeit bewegt, muß der Motor 35 die auftretenden Verluste ausgleichen. Zum Abbremsen des Fahrzeuges 30 wird die Kupplung 36 getrennt, die Kupplung 31 wird
eingeschaltet. Der Motor 35 läuft im Leerlauf. Die kinetische Energie des Fahrzeuges 30 wird von den Antriebsrädern
38 über das Differentialgetriebe 37 , das Getriebe 34, die
Zahnräder 33 und 32 und die Kupplung 31 auf die Eingangswelle 15 des Antriebes 1 mit wechselnder Energiespeicherung
und -ablage übertragen. Während des Bremsvorganges wird,
wie in Verbindung mit dem Antrieb des Rotationsquerschneiders beschrieben, der Speicher 19 aufgeladen und wieder
entladen. Nach Abschluß des Bremsvorganges ist die gesamte
Bremsenergie in der Schwungscheibe 2 gespeichert. Falls
das Fahrzeug 30 zu Stillstand kommt, müssen die beiden Kupp-

- 9 -                                    0120805

lungen 36 und 31 ausgekuppelt sein.

Zum Beschleunigen des Fahrzeuges 30 wird die Kupplung 31 eingeschaltet, die Kupplung 36 bleibt getrennt. d.h. der Motor 35 läuft weiter im Leerlauf. Die Schwungscheibe 2 treibt über die Arbeitsmaschinen 5, die Zahnräder 20, 14, Welle 15, Kupplung 31, Zahnräder 32, 33, Getriebe 34, Differentialgetriebe 37 die Antriebsräder 38 an und beschleunigt das Fahrzeug 30. Während des Beschleunigungsvorganges wird der Speicher 19 aufgeladen und wieder entladen.

Wenn die Schwungscheibe 2 ihre gesamte Energie an die Antriebsräder 38 abgegeben hat, ist der Beschleunigungsvorgang beendet. Das Getriebe 34 wird über die Kupplung 31 vom Antrieb 1 abgekuppelt. Der Motor 35 wird über die Kupplung 36 wieder zugeschaltet und treibt das Fahrzeug 1 an.

Patentansprüche :

1. Beschleunigender und verzögernder, stationärer oder fahrbarer Antrieb mit einer als Gyrospeicher wirkenden Schwungscheibe, die mit wenigstens einer Arbeitsmaschine verbunden ist, die die Abtriebswelle (15) antreibt, dadurch gekennzeichnet, daß die Arbeitsmaschine (5) auf der Schwungscheibe befestigt ist.

2. Antrieb nach Anspruch 1, dadurch gekennzeichnet, daß eine Arbeitsmaschine (5) zentral an der Schwungscheibe (2) angeordnet ist.

3. Antrieb nach Anspruch 1, dadurch gekennzeichnet, daß jede Arbeitsmaschine (5) exzentrisch zur Mittelachse der Schwungscheibe (2) angeordnet ist.

4. Antrieb nach Anspruch 3, dadurch gekennzeichnet, daß mehrere Arbeitsmaschinen (5) konzentrisch zur Mittelachse der Schwungscheibe (2) um deren Umfang gleichmäßig verteilt vorgesehen sind.

5. Antrieb nach Anspruch 1, dadurch gekennzeichnet, daß jede Arbeitsmaschine (5) eine hydraulische, pneumatische oder elektrische Arbeitsmaschine ist.

6. Antrieb nach Anspruch 1, dadurch gekennzeichnet, daß jede Arbeitsmaschine (5) über eine Steuervorrichtung (18) mit einem Speicher (19) für ihre Antriebsenergie verbunden ist.

7. Antrieb nach einem oder mehreren vorstehenden Ansprüchen, dadurch gekennzeichnet, daß er für eine periodisch zu beschleunigende oder verzögernde Maschine,
insbesondere für einen Rotationsquerschneider (1) für
Wellpappenbahnen verwendbar ist.

8. Antrieb nach Anspruch 7, dadurch gekennzeichnet, daß
die Schwungscheibe (2) von einem Antriebsmotor (29)
mit einer Geschwindigkeit zwischen der maximalen und
minimalen Geschwindigkeit der anzutreibenden Maschine
(21) angetrieben ist.

9. Antrieb nach Anspruch 8, dadurch gekennzeichnet, daß
die Schwungscheibe (2) mit einer Geschwindigkeit angetrieben ist, die etwa dem arithmetischen Mittelwert
der maximalen und minimalen Geschwindigkeit der anzutreibenden Maschine (21) liegt.

10. Antrieb nach einem oder mehreren der Ansprüche 1 bis 6,
dadurch gekennzeichnet, daß er (1) als Antrieb für ein
Fahrzeug (30) mit verwendet ist und seine Abtriebswelle (15) über eine Kupplung (31) mit dem Getriebe (34)
des Fahrzeugantriebes verbunden ist.

Fig. 1

0120805

Fig.2

Fig. 3

0120805

Fig. 4

0120805

Fig. 5

Fig. 6

Europäisches
Patentamt

## EUROPÄISCHER RECHERCHENBERICHT

EP  84 71 0005

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 712 456  (M. BEYER)  * Ansprüche 1, 2, 5, 6; Figur 1 * | 1,2,5, 7 | B 60 K    9/00<br>B 60 K    9/04<br>H 02 K    7/00<br>H 02 K    7/02<br>F 03 G    3/08<br>B 26 D    1/62 |
| X | GB-A-2 057 624  (L.O. CLARKE)  * Ganzes Dokument * | 1,3-5 | |
| A | FR-A-2 467 095  (MASCHINENFABRIK AUGSBURG-NÜRNBERG)  *  Seite 8, Zeilen 20-37; Figur 2 * | 5,6,10 | |
| A | DE-A-2 823 225  (E. LAUSTER ENTWICKLUNGEN) | | |
| A | CH-A-  150 706  (P. VIET) | | |

RECHERCHIERTE
SACHGEBIETE (Int. Cl. ³)

B 26 D    1/00
B 60 K    9/00
F 03 G    3/00
F 16 H   33/00
H 02 K    7/00

Der vorliegende Recherchenbericht wurde für alle Patentansprüche erstellt.

| Recherchenort<br>BERLIN | Abschlußdatum der Recherche<br>27-03-1984 | Prüfer<br>LEMBLE Y.A.F.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPA Form 1503. 03.82